# EUROPÄISCHE PATENTSCHRIFT

(11) **EP 2 370 312 B1**
(45) Veröffentlichungstag und Bekanntmachung des Hinweises auf die Patenterteilung: **08.01.2014**
(21) Anmeldenummer: 09760814.5
(22) Anmeldetag: 19.11.2009
(51) Int. Cl.: B63B 59/10, B63C 5/02, E04G 23/00, B64F 5/00, B24C 3/06

(54) **INSTANDHALTUNGSVORRICHTUNG**
MAINTENANCE DEVICE
DISPOSITIF D'ENTRETIEN

(30) Priorität: 20.11.2008 AT 18162008
(43) Veröffentlichungstag der Anmeldung: 05.10.2011
(73) Patentinhaber: Palfinger Systems GmbH, 5020 Salzburg (AT)
(72) Erfinder: PALFINGER, Hubert, A-5023 Salzburg (AT)
(74) Vertreter: Babeluk, Michael
(86) Internationale Anmeldenummer: PCT/EP2009/065444
(87) Internationale Veröffentlichungsnummer: WO 2010/057942

(56) Entgegenhaltungen:
- EP-A1- 0 640 440
- DE-A1- 3 843 367
- US-A- 3 149 438
- US-A- 3 548 541
- US-A- 4 285 469
- US-A- 5 138 800
- US-A- 5 320 121
- US-A- 5 858 111

## Beschreibung

Die Erfindung betrifft eine Instandhaltungsvorrichtung für großflächige Stahlbauflächen mit einem mobilen Trägersystem, wobei das Trägersystem zumindest einen vertikalen Träger aufweist und an dem zumindest ein entlang des vertikalen Trägers vertikal verfahrbarer Horizontalträger angeordnet ist, und an dem Horizontalträger zumindest zwei Armsysteme vorgesehen sind.

Es ist in vielen Bereichen der Technik erforderlich, die Oberfläche von großflächigen Bauflächen, insbesondere aus Stahl zu untersuchen sowie zu bearbeiten. Beispielsweise muss der Rumpf von Schiffen in bestimmten Abständen gegen Korrosion geschützt werden. Dazu werden alte schadhafte Anstriche in speziellen Verfahren abgetragen, um danach die gereinigten Stahloberflächen des Schiffsrumpfes mit einem neuen Anstrich versehen zu können. Dieses Verfahren wird als "Recoating" bezeichnet. Die manuelle Durchführung dieses Verfahrens ist sehr arbeitsintensiv und für die beteiligten Personen zumeist gesundheitlich belastend. Da es sich um große Flächen handelt, sind zudem teure und aufwendige Gerüstaufbauten notwendig, um an jede Stelle des Schiffsrumpfes gelangen zu können.

So ist beispielsweise in der EP 0 640 440 A1 eine Vorrichtung für eine Oberflächenbehandlung freistehender, im wesentlichen senkrechter Wände, insbesondere von Schiffen beschrieben. Hierbei ist ein Fahrgestell mit zwei Mastelementen vorgesehen, an welchem eine Kabine angeordnet ist, die relativ zur Schiffswand bewegbar ist. Bei dieser Vorrichtung handelt es sich um eine große, unflexible Vorrichtung, die insbesondere für die Bearbeitung des Bugs eines Schiffsrumpfs eher ungeeignet ist.

Weitere Vorrichtungen zur Bearbeitung von großen Oberflächen können auch der DE 38 43 367 A1, der US 5,858,111 A, der US 3,149,438 A oder der US 5,320,121 A entnommen werden.

In der US 4,285,469 ist ebenfalls eine Vorrichtung zur Reinigung von senkrechten Oberflächen offenbart, die über eine Wasserstrahleinrichtung zur Reinigung von Schiffsrümpfen verfügt und fix an einer Kaimauer installiert ist. Eine derartige Vorrichtung ist jedoch für den mobilen Einsatz gänzlich ungeeignet.

In der US 3,548,541 ist eine Vorrichtung beschrieben, die über einen Vertikalträger verfügt, an dem ein Horizontalträger mit einer Arbeitskabine angeordnet ist. Diese Vorrichtung weist im allgemeinen nur eine geringe flexibilität aufgrund der Ausführung des Horizontalträgers auf und ist zudem nur für die Durchführung eines einzigen Arbeitsschritts während des "Recoatings", nämlich dem Durchführen des Sandstrahlens, geeignet.

Die US 5,138,800 A offenbart eine Vorrichtung der eingangs erwähnten Art, die jedoch ebenfalls aufgrund ihres im wesentlichen starren Aufbaus für die direkte Bearbeitung und Inspektion von gekrümmten, großflächigen Oberflächen, wie beispielsweise Schiffsrümpfen, nur eingeschränkt geeignet ist.

Es ist daher Aufgabe der Erfindung, die oben genannten Nachteile des Stand der Technik zu beseitigen und eine Vorrichtung der eingangs erwähnten Art zur Verfügung zu stellen, die eine besonders hohe Flexibilität in ihrem Einsatz aufweist.

Diese Aufgabe wird erfindungsgemäß dadurch gelöst, dass an einem ersten Ende des zumindest einen Horizontalträgers eine erste Arbeitskabine mit einem ersten Armsystem zur Aufnahme von automatisierten Werkzeugen und an einem zweiten Ende des zumindest einen Horizontalträgers ein zweites Armsystem vorgesehen ist, an dem eine zweite Arbeitskabine angeordnet ist. Es handelt sich hier im wesentlichen um ein mobiles, turmkranähnliches Trägersystem, das in der Lage ist, aufgrund seiner zumindest zwei Armsysteme gleichzeitig zwei unterschiedliche Arbeitsschritte an der Stahlbaufläche durchzuführen. So ist beispielsweise ein Armsystem mit einem Werkzeug zum Reinigen der Oberfläche mittels Wasserstrahl ausgerüstet, während das zweite Armsystem einen Strahlkopf für das Sandstrahlen aufweist. Die Erfindung ist insbesondere dafür geeignet, dass die erste Arbeitskabine, die bevorzugterweise direkt am Horizontalträger angeordnet ist, über ein erstes Armsystem die Stahlbaufläche bearbeitet, während die zweite Arbeitskabine über ein zweites Armsystem direkt an die Stahlbaufläche heranführbar ist, um beispielsweise manuelles Arbeiten an dieser Fläche zu ermöglichen. Die Ein- oder Zweimann-Arbeitskabinen sind üblicherweise mit sämtlichen Strukturen ausgerüstet, um die Entsorgung des Abraummaterials beim Entschichten, oder die Abdichtung des Kabinenfeldes nach außen zur Minimierung der Umweltbelastung durch freiwerdendes Abraummaterial oder des Overspraynebels beim Wiederbeschichten zu gewährleisten. Insbesondere ist auch eine Absaugung des Kabinenraums sowie die Versorgung des Arbeitsplatzes mit Frischluft für die Arbeitskräfte, die die End- und Beschichtungsarbeiten manuell durchführen, vorgesehen.

In einer bevorzugten Ausführung der Erfindung ist zumindest eines der beiden Armsysteme ein fünfachsig inkrementell gesteuertes Knickarmsystem zur Aufnahme von automatisierten Werkzeugen. Das fünfachsige System ermöglicht es, dass das automatisierte Werkzeug auch an wenig zugänglichen Stellen herangeführt werden kann, während eine inkrementelle Steuerung beispielsweise eine automatisierte Führung des Werkzeugs über einen bestimmten Oberflächenbereich der zu bearbeitenden Stahlbaufläche erlaubt.

Die automatisierten Werkzeuge sind üblicherweise aus einer Gruppe gewählt, die Strahlköpfe für Wasser oder unterschiedliche Granulate, Beschichtungsköpfe und Inspektionssysteme umfasst. Diese Werkzeuge werden insbesondere bei dem oben beschriebenen "Recoating" von Schiffsrümpfen eingesetzt. In einer ersten Ausführung der Erfindung sind die beiden Armsysteme unabhängig voneinander ansteuerbar. Alternativ hierzu kann vorgesehen sein, dass die beiden Armsysteme in Abhängigkeit voneinander ansteuerbar sind. So ist beispielsweise die Abhängigkeit der beiden Armsystem voneinander dann vorteilhaft, wenn das erste Armsystem z.B. eine Beschichtung der Oberfläche durchführt, während das zweite Armsystem ein Inspektionssystem umfasst, dass die Qualität der soeben aufgetragenen Lackschicht überprüft. Unabhängig voneinander arbeitende Armsysteme werden insbesondere dann zum Einsatz kommen, wenn beide Armsysteme mit dem gleichen Werkzeug ausgestattet sind, um einen rascheren Arbeitsfortschritt zu erhalten.

Die besondere Flexibilität der erfindungsgemäßen Instandhaltungsvorrichtung wird insbesondere auch dadurch erreicht, dass zu einem der Horizontalträger zumindest abschnittsweise in der Horizontalebene verschwenkbar ist, so dass insbesondere auch die Arbeitskabine bzw. die entsprechenden Werkzeuge an den Schiffsrumpf leichter heranführbar sind. Des weiteren wird die Flexibilität auch dadurch unterstützt, dass in besonders bevorzugten Ausführungen der Erfindung der Horizontalträger und/oder der Vertikalträger in seiner Länge teleskopisch verlängerbar ist. Damit kann die Instandhaltungsvorrichtung für die unterschiedlichsten Einsatzgebiete verwendet werden, weil seine Dimensionen entsprechend anpassbar sind.

Bevorzugterweise ist das Trägersystem im wesentlichen parallel zu der Stahlbaufläche inkrementell programmierbar beweglich. Hierbei wird das Turm- bzw. das jeweilige Armsystem kontinuierlich entlang der Stahlbaufläche geführt, wobei insbesondere eine horizontale und vertikale Mäanderbewegung automatisiert durchgeführt wird. Auf diese Weise wird eine vorschreitende Bearbeitungsfläche generiert. Um eine besonders flexible Arbeitsweise der erfindungsgemäßen Instandhaltungsvorrichtung zu gewährleisten, ist bevorzugterweise das Trägersystem auf einem Schienensystem verfahrbar. Alternativ kann vorgesehen sein, dass das Trägersystem auf einem Motorfahrzeug anordenbar ist. Dies hat insbesondere den Vorteil, dass für kurzzeitige Bearbeitungen kein eigenes Schienensystem notwendig ist und das Instandhaltungssystem mittels Motorfahrzeug, insbesondere Lastkraftwagen zu der jeweiligen Stelle einfach herangeführt werden kann.

Das oben beschriebene Instandhaltungssystem ist insbesondere für die Bearbeitung und/oder Inspektion von Schiffsrümpfen und/oder Stahltankaußenwänden geeignet.

Im folgenden wird anhand von nichteinschränkenden Ausführungsbeispielen mit zugehörigen Figuren die Erfindung näher erläutert. Darin zeigen:
- Fig. 1a: eine perspektivische Ansicht einer ersten Ausführung der erfindungsgemäßen Instandhaltungsvorrichtung;
- Fig. 1b: eine Detailansicht der Instandhaltungsvorrichtung aus Fig. 1a;
- Fig. 2a: eine erste Seitenansicht einer zweiten Ausführung der erfindungsgemäßen Instandhaltungsvorrichtung;
- Fig. 2b: eine Ansicht der Instandhaltungsvorrichtung aus Fig. 2a von oben;
- Fig. 2c: eine zweite Seitenansicht der Instandhaltungsvorrichtung aus Fig. 2a;
- Fig. 3: eine Seitenansicht einer dritten Ausführung der erfindungsgemäßen Instandhaltungsvorrichtung; und
- Fig. 4: eine Vielzahl von erfindungsgemäßen Instandhaltungsvorrichtungen im Einsatz an einem Schiffsrumpf in einer Ansicht von oben.

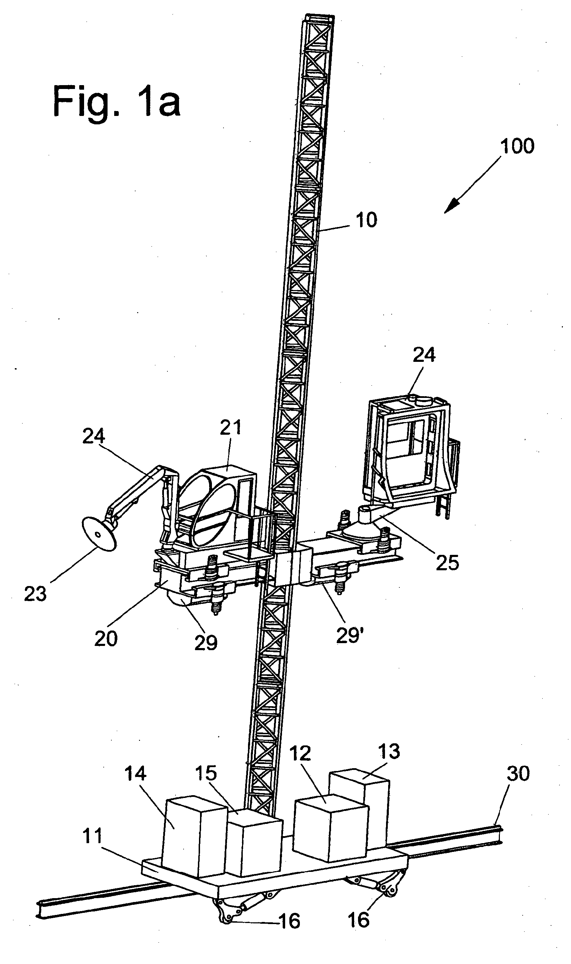

In der Fig. 1a ist eine bevorzugte Ausführung der erfindungsgemäßen Instandhaltungsvorrichtung 100 dargestellt, wobei an einem Vertikalträger 10, der auf einer Plattform 11 angeordnet ist, ein Horizontalträger 20 vertikal bewegbar ist.

Die Plattform 11 ist entlang eines Schienensystems 30 bewegbar und weist Einrichtungen wie Stromversorgung 12, Wasserversorgung 13, Druckluftversorgung 14 und/oder Materialversorgung 15 beispielsweise für Sand und/oder Farbe auf, die über Versorgungsleitungen (nicht dargestellt) entlang des Vertikalträgers 10 mit dem Horizontalträger 20 in Verbindung stehen. Des weiteren ist unterhalb der Plattform 11 ein Nivellierungssystem 16 vorgesehen, mit welchem die Plattform 11 und folglich der Vertikalträger 10 auf die erforderliche Weise entlang der zu bearbeitenden Stahlfläche ausgerichtet werden kann, während die Verschiebung entlang des Schienensystems 30 eine Bewegung im wesentlichen parallel zu dieser Fläche erlaubt.

In der hier dargestellten Ausführung der Erfindung ist an einem Ende des Horizontalträgers 20 eine erste Arbeitskabine 21 angeordnet, die über ein erstes Armsystem 22 verfügt, an dessen Ende sich ein automatisiertes Werkzeug 23 zur Bearbeitung der Stahloberfläche, beispielsweise ein Sandstrahlkopf befindet. Bei dem ersten Armsystem 22 handelt es sich bevorzugt um ein fünfachsig inkrementell gesteuertes Knickarmsystem, mit dessen Hilfe das Werkzeug 23 an die zu bearbeitende Stahlfläche herangeführt und entlang derselben geführt wird, um diese beispielsweise von Lack und Farbe zu reinigen.

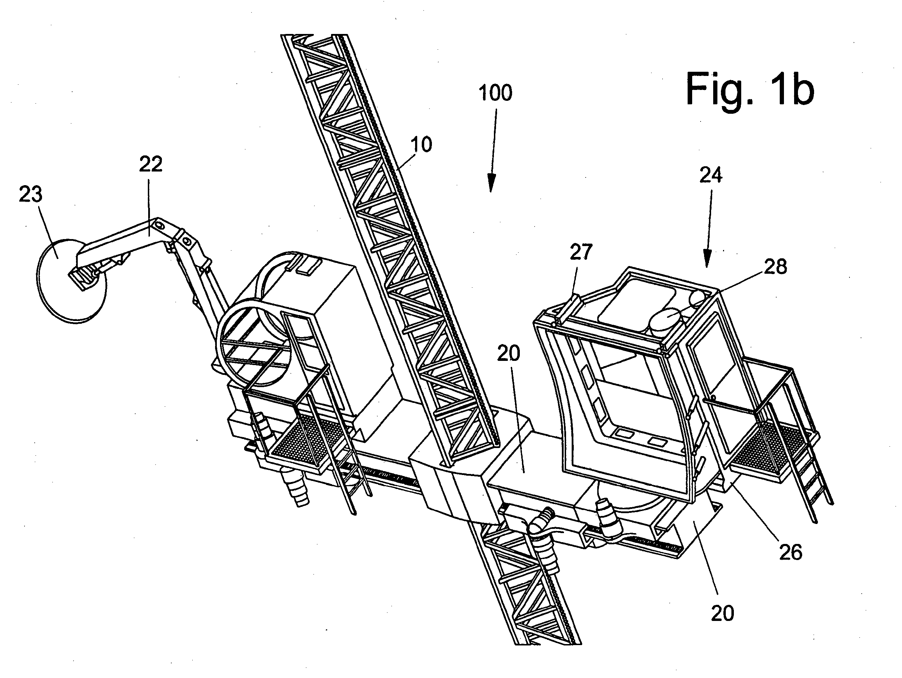

An dem gegenüberliegenden Ende ist auf dem Horizontalträger 20 eine zweite Arbeitskabine 24 angeordnet, die über ein zweites Armsystem 25 in ihrer Position veränderbar ist. Diese zweite Arbeitskabine 24 ist insbesondere für die händische Bearbeitung der Oberfläche ausgelegt und weist gemäß Fig. 1b ein ausfahrbares Element 26 mit Dichtungseinrichtungen auf, das über Kolben 27 an die zu bearbeitende Oberfläche herangeführt und angepresst wird. Dadurch wird ein hermetisch abgeschlossener Arbeitsraum geschaffen, der über ein Lüftungssystem 28 belüftet wird und insbesondere zum Beschichten der zu bearbeitenden Oberfläche mit Farbe vorgesehen ist. Durch die hermetische Abschließung des zu bearbeitenden Bereichs bleibt dieser im wesentlichen staub- und verschmutzungsfrei, während keine unerwünschten Farbnebel nach außen dringen können.

Die in den Fig. 1a sowie Fig. 1b gezeigte erfindungsgemäße Ausführung der Instandhaltungseinrichtung 100 weist zudem an der Unterseite des Horizontalträgers 20 ein Gegengewichtssystem auf, dessen Gewichte 29, 29' sich gemäß den Bewegungen der ersten Arbeitskabine 21 bzw. deren Armsystem 22 sowie der zweiten Arbeitskabine 24 synchron verstellen.

Die hier dargestellte Instandhaltungsvorrichtung 100 erlaubt eine gleichzeitige Bearbeitung der Oberfläche, wobei beispielsweise in einem ersten Schritt ein erster Arbeiter in der ersten Arbeitskabine 21 die Oberfläche mittels Sandstrahlen reinigt, während ein zweiter Arbeiter in der zweiten Arbeitskabine 24 die nachträgliche Beschichtung der Oberfläche durchführt.

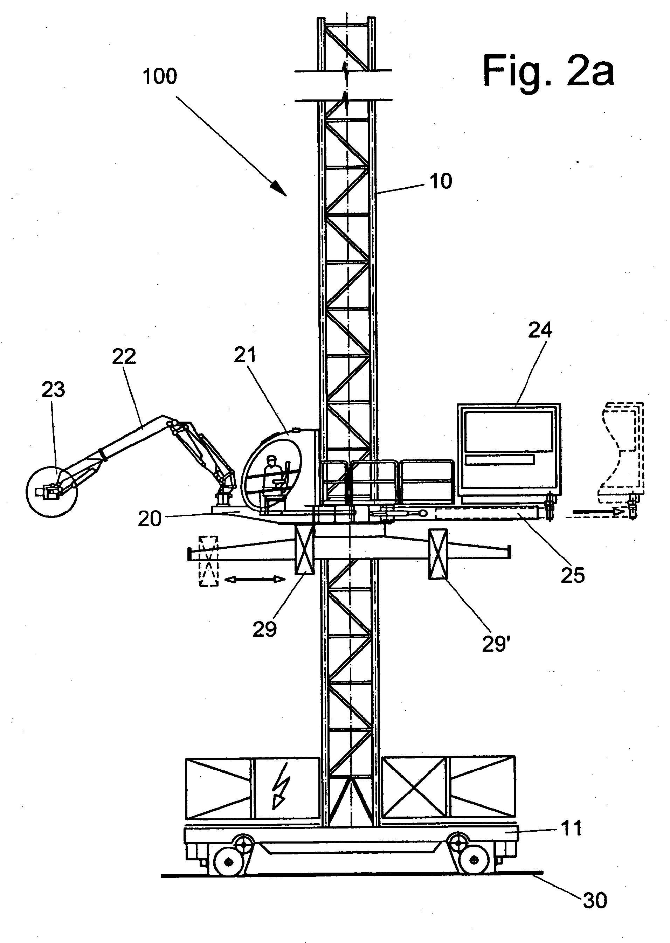

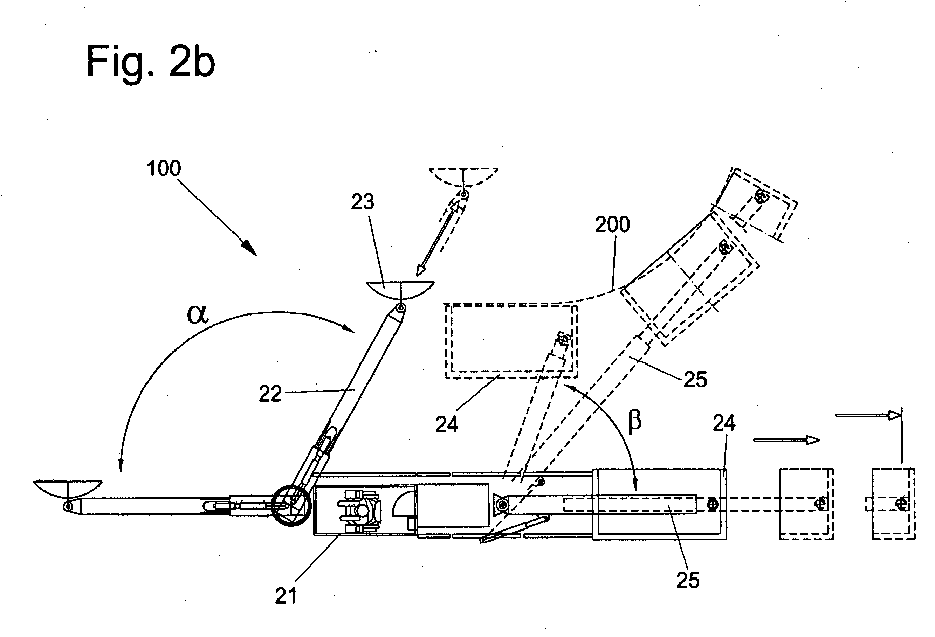

Eine weitere Variante der erfindungsgemäßen Instandhaltungsvorrichtung 100 kann den Figs. 2a bis 2c entnommen werden. Die hier dargestellte Ausführung unterscheidet sich von der vorherigen insbesondere dadurch, dass die zweite Arbeitskabine 24 auf einem zweiten Armsystem 25 des Horizontalträgers 20 angeordnet ist, der im Gegensatz zu der vorherigen Ausführung teleskopartig ausfahrbar ist. Insbesondere aus der Fig. 2b ist ersichtlich, dass das erste Armsystem 22 der ersten Arbeitskabine 21 mit beispielsweise einem Sandstrahlkopf ausgerüstet ist, wobei das erste Armsystem 22 um einen Winkel α von bis zu 120° verschwenkt werden kann, sodass ein weiter Bereich der Oberfläche bearbeitbar ist, ohne dass der Vertikalträger 10 über seine Plattform 11 verschoben werden muss. Gleichzeitig ist vorgesehen, dass das erste Armsystem 22 ebenfalls teleskopisch verlängerbar ist. Die zweite Arbeitskabine 24 ist auf einem Teleskoparm 25 angeordnet, der zusätzlich über einen Winkel β von bis zu 45° zu der zu bearbeitenden Oberfläche verschwenkbar ist.

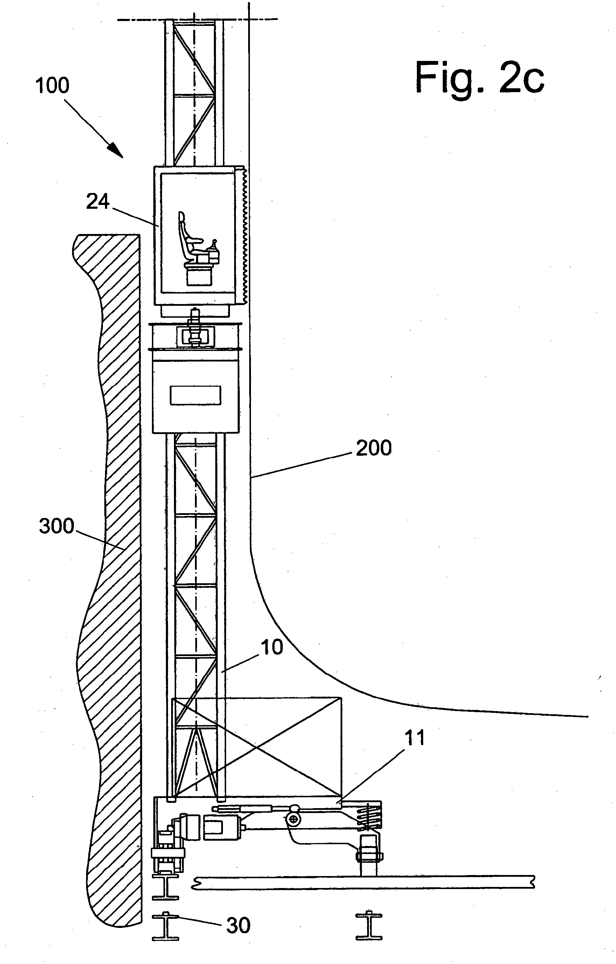

Die Fig. 2c zeigt den Einsatz der erfindungsgemäßen Instandhaltungsvorrichtung 100 bei der Bearbeitung eines Schiffsrumpfs 200, wobei diese aufgrund ihrer platzsparenden und flexiblen Bauweise beispielsweise zwischen Schiffsrumpf 200 und einer Dockwand 300 angeordnet werden kann.

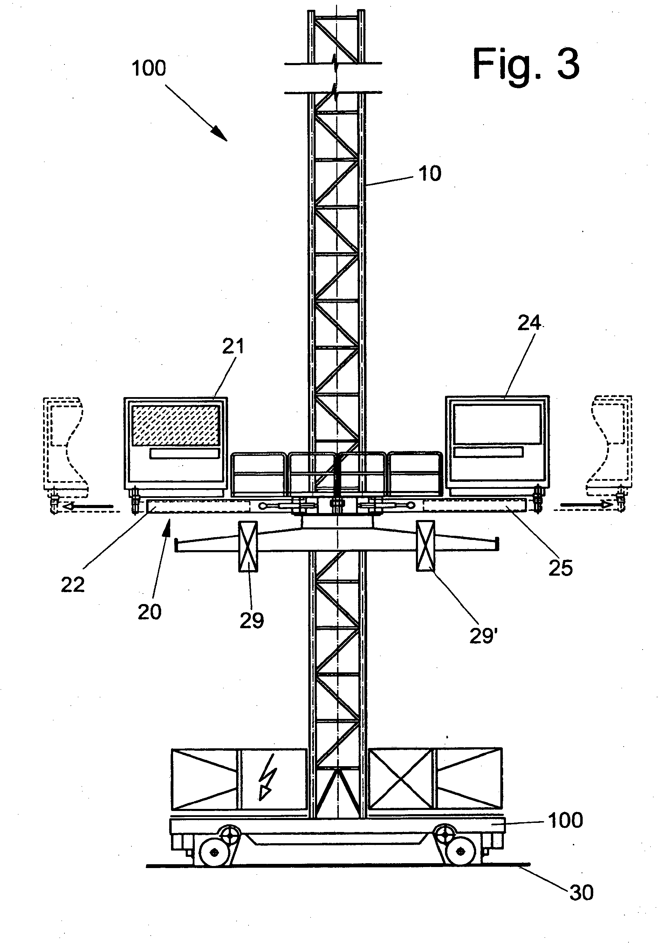

Die in der Fig. 3 dargestellte Instandhaltungseinrichtung 100 weist zwei Arbeitskabinen 21, 24 auf, die jeweils zur händischen Bearbeitung der Oberfläche eingerichtet sind. Diese Arbeitskabinen 21, 24 sind jeweils auf Teleskoparmen 22, 25 angeordnet, wobei jedes dieser Armsysteme 22, 24 unabhängig von dem anderen verlängerbar und verschwenkbar ist.

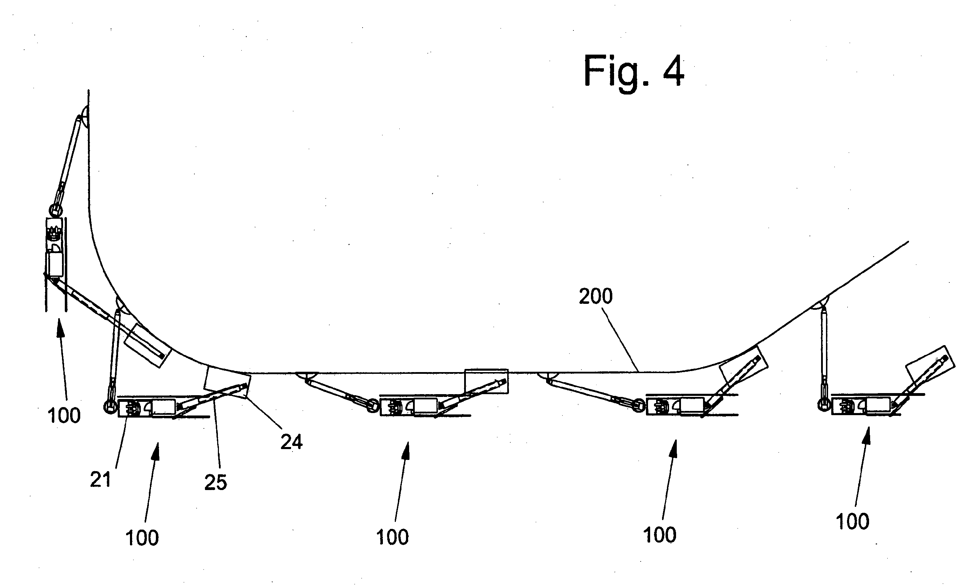

In der Fig. 4 ist in einer Ansicht von oben der Ausschnitt eines Schiffsrumpfes 200 dargestellt, der mittels fünf erfindungsgemäßen Instandhaltungsvorrichtungen 100 gleichzeitig bearbeitet wird. Jede dieser Instandhaltungsvorrichtungen 100 entfernt in ihrem Bereich einerseits die ursprünglich auf dem Schiffsrumpf 200 befindliche Farbe und beschichtet sie im nächsten Schritt mit neuer Farbe. Ebenso kann beispielsweise vorgesehen sein, dass eine Reinigungseinheit zur Reinigung der Schiffsoberfläche 200 mittels Hochdruckwasserstrahl an dem ersten Armsystem 22 angeordnet ist, während in der zweiten Arbeitskabine 24 die gereinigte Oberfläche auf fehlerhafte Stellen überprüft wird.

Es versteht sich, dass die Erfindung nicht auf die oben beschriebenen Ausführungen beschränkt ist. Insbesondere kann der Einsatz unterschiedlichster Werkzeuge an den Armsystemen der ersten Arbeitskabine vorgesehen sein. Ebenso kann vorgesehen sein, dass beide Arbeitskabinen über ein eigenständiges Armsystem für die Aufnahme von Werkzeugen verfügen. Diese Werkzeuge umfassen sämtliche Gerätschaften, die zum Waschen oder Reinigen, Bearbeiten wie beispielsweise Aufrauen und/oder Beschichten von Oberflächen ausgelegt sind, sowie Einrichtungen und Geräte zur Inspektion von Oberflächen. Das vorliegende Instandhaltungssystem ist besonders auch für die automatisierte Bearbeitung von im Wesentlichen senkrechten Oberflächen, insbesondere aus Stahl geeignet, wobei beispielsweise nur eine Person zur Überwachung eines vollautomatischen "Recoating"-Prozesses benötigt wird.

## Patentansprüche

1. Instandhaltungsvorrichtung (100) für großflächige Stahlbauflächen (200) mit einem mobilen Trägersystem, wobei das Trägersystem zumindest einen vertikalen Träger (10) aufweist und an dem zumindest ein entlang des vertikalen Trägers (10) vertikal verfahrbarer Horizontalträger (20) angeordnet ist, und an dem Horizontalträger (20) zumindest zwei Armsysteme (22, 25) vorhanden sind, **dadurch gekennzeichnet, dass** an einem ersten Ende des zumindest einen Horizontalträgers (20) eine erste Arbeitskabine (21) mit einem ersten Armsystem (22) zur Aufnahme von automatisierten Werkzeugen (23) und an einem zweiten Ende des zumindest einen Horizontalträgers (20) ein zweites Armsystem (25) vorgesehen ist, an dem eine zweite Arbeitskabine (24) angeordnet ist.

2. Instandhaltungsvorrichtung (100) nach Anspruch 1, **dadurch gekennzeichnet, dass** zumindest eines der beiden Armsysteme (22, 25) ein fünfachsig inkrementell gesteuertes Knickarmsystem zur Aufnahme von automatisierten Werkzeugen (23) ist.

3. Instandhaltungsvorrichtung (100) nach Anspruch 1 oder 2, **dadurch gekennzeichnet, dass** die automatisierten Werkzeuge (23) aus einer Gruppe gewählt sind, die Strahlköpfe für Wasser oder unterschiedliche Granulate, Beschichtungsköpfe und Inspektionssysteme umfasst.

4. Instandhaltungsvorrichtung (100) nach einem der Ansprüche 1 bis 3, **dadurch gekennzeichnet, dass** die beiden Armsysteme (22, 25) unabhängig voneinander ansteuerbar sind.

5. Instandhaltungsvorrichtung (100) nach einem der Ansprüche 1 bis 3, **dadurch gekennzeichnet, dass** die beiden Armsysteme (22, 25) in Abhängigkeit voneinander ansteuerbar sind.

6. Instandhaltungsvorrichtung (100) nach einem der Ansprüche 1 bis 5, **dadurch gekennzeichnet, dass** die zweite Arbeitskabine (24) über das zweite Armsystem (25) in ihrer Position veränderbar ist.

7. Instandhaltungsvorrichtung (100) nach einem der Ansprüche 1 bis 6, **dadurch gekennzeichnet, dass** der Horizontalträger (20) zumindest abschnittsweise in der Horizontalebene verschwenkbar ist.

8. Instandhaltungsvorrichtung (100) nach einem der Ansprüche 1 bis 7, **dadurch gekennzeichnet, dass** der Horizontalträger (20) und/oder der Vertikalträger (10) in seiner Länge teleskopisch verlängerbar ist.

9. Instandhaltungsvorrichtung (100) nach einem der Ansprüche 1 bis 8, **dadurch gekennzeichnet, dass** das Trägersystem auf einem Schienensystem (30) verfahrbar ist.

10. Instandhaltungsvorrichtung (100) nach einem der Ansprüche 1 bis 9, **dadurch gekennzeichnet, dass** das Trägersystem auf einem Motorfahrzeug anordenbar ist.

11. Verwendung einer Instandhaltungsvorrichtung (100) nach einem der Ansprüche 1 bis 10 für die Bearbeitung und/oder Inspektion von Schiffsrümpfen (200) und/oder Stahltankaußenwänden.

## Claims

1. A maintenance apparatus (100) for large-area steel building surfaces (200), comprising a mobile support system, with the support system comprising at least one vertical support (10) on which at least one horizontal support (20) is arranged which can move vertically along the vertical support (10) and comprises at least one work cabin (21, 24), and at least two arm systems (22, 25) are provided on the at least one horizontal support (20), **characterised in that** a first work cabin (21) with a first arm system (22) for the mounting of automated tools is provided at a first end of the at least one horizontal support (20), and a second arm system (25) with a second work cabin (24) is provided at a second end of the at least one horizontal support (20).

2. A maintenance apparatus (100) according to claim 1, **characterised in that** at least one of the two arm systems (22, 25) is a five-axis, incrementally controlled articulated arm system for accommodating automated tools (23).

3. A maintenance apparatus (100) according to claim 1 or 2, **characterised in that** the automated tools (23) are usually chosen from a group which comprises blasting heads for water or different granulates, coating heads and inspection systems.

4. A maintenance apparatus (100) according to one of the claims 1 to 3, **characterised in that** the two arm systems (22, 25) can be triggered independent from one another.

5. A maintenance apparatus (100) according to one of the claims 1 to 3, **characterised in that** the two arm systems (22, 25) can be triggered dependent on one another.

6. A maintenance apparatus (100) according to one of the claims 1 to 5, **characterised in that** the second work cabin (24) can be moved in its position via the second arm system (25).

7. A maintenance apparatus (100) according to one of the claims 1 to 6, **characterised in that** the horizontal support (20) is pivotable at least in part in the horizontal plane.

8. A maintenance apparatus (100) according to one of the claims 1 to 7, **characterised in that** the horizontal support (20) and/or the vertical support (10) is telescopically extensible in its length.

9. A maintenance apparatus (100) according to one of the claims 1 to 8, **characterised in that** the support system is movable on a rail system (30).

10. A maintenance apparatus (100) according to one of the claims 1 to 8, **characterised in that** the support system can be arranged on a motor vehicle.

11. The use of a maintenance apparatus (100) according to one of the claims 1 to 10 for processing and/or inspecting ship's hulls and/or the outside walls of steel tanks.

## Revendications

1. Dispositif d'entretien (100) pour des faces de bâtiments en acier (200) de grande surface, comportant un système support mobile, ce système support comportant au moins un support vertical (10) sur lequel est monté un support horizontal (20) déplaçable verticalement le long du support vertical (10), et au moins deux systèmes de bras (22, 25), étant montés sur le support horizontal (20),
**caractérisé en ce qu'**
à une première extrémité du support horizontal (20) est montée une première cabine de travail (21) comportant un premier système de bras (22) destiné à recevoir un outil automatisé (23), et, à la seconde extrémité du support horizontal (20) est monté un second système de bras (25) portant une seconde une cabine de travail (24).

2. Dispositif d'entretien (100) conforme à la revendication 1,
**caractérisé en ce qu'**
au moins l'un des deux systèmes de bras (22, 25) est un système de bras articulé à cinq axes commandé par incrément destiné à recevoir des outils automatisés (23).

3. Dispositif d'entretien (100) conforme à la revendication 1 ou 2,
**caractérisé en ce que**
les outils automatisés (23) sont choisis dans le groupe qui renferme des têtes de projection d'eau ou de différents granulés, des têtes de revêtement et des systèmes d'inspection.

4. Dispositif d'entretien (100) conforme à l'une des revendications 1 à 3,
**caractérisé en ce que**
les deux systèmes de bras (22, 25) peuvent être commandés indépendamment l'un de l'autre.

5. Dispositif d'entretien (100) conforme à l'une des revendications 1 à 3,
**caractérisé en ce que**
les deux systèmes de bras (22, 25) peuvent être commandés de manière dépendante.

6. Dispositif d'entretien (100) conforme à l'une des revendications 1 à 5,
**caractérisé en ce que**
la position de la seconde cabine de travail (24) peut être modifiée par l'intermédiaire du second système de bras (25).

7. Dispositif d'entretien (100) conforme à l'une des revendications 1 à 6,
**caractérisé en ce que**
le support horizontal (20) peut pivoter au moins par section dans le plan horizontal.

8. Dispositif d'entretien (100) conforme à l'une des revendications 1 à 7,
**caractérisé en ce que**
la longueur du support horizontal (20) et/ou du support vertical (10) peut être augmentée télescopiquement.

9. Dispositif d'entretien (100) conforme à l'une des revendications 1 à 8,
**caractérisé en ce que**
le système support peut être déplacé sur un système de rails (30).

10. Dispositif d'entretien (100) conforme à l'une des revendications 1 à 9,
**caractérisé en ce que**
le système support peut être monté sur un véhicule à moteur.

11. Utilisation d'un dispositif d'entretien (100) conforme à l'une des revendications 1 à 10 pour le traitement et/ou l'inspection de coques de navires (200) ou de parois externes de réservoirs en acier.
